(19) Europäisches Patentamt / European Patent Office / Office européen des brevets

(11) **EP 2 780 866 B1**

(12) **EUROPEAN PATENT SPECIFICATION**

(45) Date of publication and mention
of the grant of the patent:
**11.08.2021 Bulletin 2021/32**

(51) Int Cl.:
*G06K 19/06* (2006.01)     *A47J 31/44* (2006.01)
*A47J 31/22* (2006.01)

(21) Application number: **12783623.7**

(22) Date of filing: **13.11.2012**

(86) International application number:
**PCT/EP2012/072461**

(87) International publication number:
**WO 2013/072297 (23.05.2013 Gazette 2013/21)**

(54) **SUPPORT AND CAPSULE FOR PREPARING A BEVERAGE BY CENTRIFUGATION, SYSTEM AND METHOD FOR PREPARING A BEVERAGE BY CENTRIFUGATION**

TRÄGER UND KAPSEL ZUR HERSTELLUNG EINES GETRÄNKS DURCH ZENTRIFUGIEREN, SYSTEM UND VERFAHREN ZUR HERSTELLUNG EINES GETRÄNKS DURCH ZENTRIFUGIEREN

SUPPORT ET CAPSULE POUR PRÉPARER UNE BOISSON PAR CENTRIFUGATION, SYSTÈME ET PROCÉDÉ POUR PRÉPARER UNE BOISSON PAR CENTRIFUGATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2011 EP 11189235**
**15.11.2011 EP 11189237**
**17.11.2011 EP 11189588**

(43) Date of publication of application:
**24.09.2014 Bulletin 2014/39**

(73) Proprietor: **Société des Produits Nestlé S.A.**
**1800 Vevey (CH)**

(72) Inventors:
• **JARISCH, Christian**
**CH-1095 Lutry (CH)**
• **KAESER, Stefan**
**CH-5000 Aarau (CH)**
• **GERBAULET, Arnaud**
**F-25160 Oye et Pallet (FR)**

(74) Representative: **Schnyder, Frank Simon**
**Société des Produits Nestlé S.A.**
**Avenue Nestlé 55**
**1800 Vevey (CH)**

(56) References cited:
EP-A1- 1 764 015     WO-A1-93/14471
WO-A1-2005/044067     WO-A1-2011/069830
WO-A2-2005/106769     DE-A1-102010 002 439
US-A- 5 103 081     US-A1- 2004 089 158
US-A1- 2008 245 236

## Description

### Field of the invention:

The invention pertains to the field of the beverage preparation, in particular using capsules containing an ingredient for preparing a beverage in a beverage preparation machine. The present invention relates in particular to optical code supports adapted to store information related to a capsule, capsules associated with/or embedding a code support, reading and processing arrangements for reading and using such information for preparing a beverage.

### Background of the invention:

For the purpose of the present description, a "beverage" is meant to include any human-consumable liquid substance, such as coffee, tea, hot or cold chocolate, milk, soup, baby food or the like. A "capsule" is meant to include any pre-portioned beverage ingredient or combination of ingredients (hereafter called "ingredient") within an enclosing packaging of any suitable material such as plastic, aluminium, a recyclable and/or bio-degradable material and combinations thereof, including a soft pod or a rigid cartridge containing the ingredient.

Certain beverage preparation machines use capsules containing an ingredient to be extracted or to be dissolved and/or an ingredient that is stored and dosed automatically in the machine or else is added at the time of preparation of the drink. Some beverage machines possess liquid filling means that include a pump for liquid, usually water, which pumps the liquid from a source of water that is cold or indeed heated through heating means, e.g. a thermoblock or the like. Certain beverage preparation machines are arranged to prepare beverages by using a centrifugation extraction process. The principle mainly consists in providing beverage ingredient in a container of the capsule, feeding liquid in the receptacle and rotating the receptacle at elevated speed to ensure interaction of liquid with powder while creating a gradient of pressure of liquid in the receptacle; such pressure increasing gradually from the centre towards the periphery of the receptacle. As liquid traverses the coffee bed, extraction of the coffee compounds takes place and a liquid extract is obtained that flows out at the periphery of the receptacle.

Typically, it is suitable to offer to the user a range of capsules of different types containing different ingredients (e.g., different coffee blends) with specific taste characteristics, to prepare a variety of different beverages (e.g., different coffee types) with a same machine. The characteristics of the beverages can be varied by varying the content of the capsule (e.g., coffee weight, different blends, etc.) and by adjusting key machine parameters such as the supplied liquid volume or temperature, the rotational speed, the pressure pump. Therefore, there is a need for identifying the type of capsule inserted in the beverage machine to enable the adjustment of the brewing parameters to the inserted type. Moreover, it may also be desirable for capsules to embed additional information, for example safety information like use-by date or production data like batch numbers.

WO2010/026053 relates to a controlled beverage production device using centrifugal forces. The capsule may comprise a barcode provided on an outside face of the capsule and which enables a detection of the type of capsule and/or the nature of ingredients provided within the capsule in order to apply a predefined extraction profile for the beverage to be prepared.

It is known from the art, for example in document EP1764015A1, to print locally an identifying barcode on a small area of the circular crown of a coffee wafer for use with a conventional non-centrifugation coffee brewing systems. Said systems comprise a barcode reader to read the identifying barcode on the capsule. Barcode readers or barcode scanners are electronic devices comprising a light source, a lens and a light sensor translating optical impulses into electrical ones. They generally comprise a light-emitting/laser diode, or a camera-type sensor. Barcode readers in beverage preparation machine are adapted to read the barcode either by moving the sensing element across the bars (by moving/changing the orientation of the light source beam to scan the entire code), or by taking an image of the whole code at a time with a light-sensitive array/matrix.

Using such kind of code readers is not adapted to be used in the context of a centrifugation extraction based system having a rotating brewing unit. The use of barcode readers having moving parts like a scanning element may raise severe concerns in term of reliability since it is likely to be exposed to a harsh environment with cyclical vibrations and hot vapors when placed at the immediate vicinity of the rotating brewing unit. Barcode reader with camera-type sensor should be positioned so as to be able to take an image of the whole barcode. As a consequence, the entire code needs to be directly visible from the reader. The free space available in a rotating brewing unit dedicated to a code reader being quite limited, it is generally not possible to meet this visibility requirement.

Whatever the kind of barcode reader used, the geometrical configuration of the rotating brewing units in centrifugation extraction based systems prevents the barcode reader to read a code spread on a large section of the capsule: as a consequence, the dimensions of the barcode are strictly limited, leading to a very low quantity of coded information for a given level of reliability of the readings, typically around 20 bits only. In addition barcode readers are quite expensive.

Reliably reading code printed on a capsule while said capsule is positioned into a rotating brewing unit implies the reliable recognition of each distinct symbol forming said code. Hence, not only the characteristics and the optical behavior of such symbols should be chosen to perform adequately in this context, but it is also of the uttermost importance to determine this information to ensure their reproducibility on all capsules. The used symbols should be reproduced on the capsule so as a suitable optical reader in the machine could detect enough contrast between the different symbols, even when said reader performs optical measurements of the code of the capsule through intermediate semi-transparent part of the capsule holder. The code should be optically readable in the harsh environment of the rotating brewing unit. The code should also be readable, without knowledge by the code reader of the position and/or orientation in which the capsule has been inserted in the capsule holder. Traditional barcodes and other optical coding element known in the art for a capsule fail to meet these requirements, and moreover are not well optically defined. Some background art is known from documents EP 1 764 015 A1, DE 10 2010 002439 A1, WO 2011/069830 A1 and US 5 103 081 A.

Co-pending international patent application WO 2011/141535 A1 relates to a support adapted to be associated with or be a part of a capsule for the preparation of a beverage. The support comprises a section on which at least one sequence of symbols is represented so as that each symbol is sequentially readable, by a reading arrangement of an external device, while the capsule is driven in rotation along an axis of rotation, each sequence code a set of information related to the capsule. Such invention enables to make a large volume of coded information available, such as about 100 bits of redundant or non-redundant information, without using barcode readers having moving parts like a scanning element which may raise severe concerns in terms of reliability. Another advantage is also to be able to read the code support by rotating the capsule while the capsule is in place, in a ready to brew position in the rotary capsule holder. However, one disadvantage lies in that those reading conditions remain specifically difficult for different reasons, such as because the incoming and outgoing rays of light must traverse the capsule holder when the capsule is held by the capsule holder, causing the loss of a great part of energy and/or because the light rays may incur significant angular deviations due to particular mechanical constraints born by the rotating assembly of the machine and possibly coming from different origins (e.g., vibrations, wearing, unbalanced mass distribution, etc.). Furthermore, it is not suitable to compensate the loss of reflectivity by improving the performance of the light emitting and sensing devices of the machine as it would make the beverage preparation machine too expensive.

Therefore, there is a need for providing an improved code support which enables to provide a reliable reading in the particular conditions met in a centrifugal beverage machine using capsules for the preparation of the beverage.

Therefore it still exists a need to provide a capsule having an element for coding at least 100 bits of redundant or non-redundant information, said element having well-defined and predictable optical characteristics so as to be reliably readable by an optical reading arrangement, in a centrifugational extraction based system. In particular, there is a need for reliably reading information on a proper support associated to or part of a capsule, in particular, a support able to generate an enhanced signal in particularly difficult reading conditions found in a centrifugal beverage machine.

## Brief description of the invention

An object of the invention is to provide means for storing, reading and processing information related to a capsule, more particularly information for identifying said capsule within a production machine and for retrieving or reading information for adjusting working parameters of the machine and/or for controlling parameters for preparing a beverage with said capsule. Another object is to provide a capsule embedding such means.

Another object is to control optimal conditions for preparing a beverage.

Another object is to provide a solution for reliably reading information related to a capsule with a sensor disposed in the machine, for example in the processing module / brewing unit of the machine, where available spaces are quite limited and in a harsh environment (ingredients traces, presence of vapors and liquids,...) .

One or more of these objects are met by the subject matter of the independent claims 1 and 21. The dependent claims further provide solutions to these objects and/or additional benefits. More particularly, according to a first aspect, the invention relates to an optically readable code support to be attached to or part of a capsule for delivering a beverage in a beverage producing device by centrifugation of the capsule, the support comprising at least one sequence of symbols arranged on the support circumferentially about an axis of rotation so that each symbol is sequentially readable by a reading arrangement of an external reading device while the capsule is driven in rotation along an the axis of rotation. The symbols are at least partly formed of surfaces arranged to reflect mainly diffusively, in any direction forming an angle comprised between 3° and 10°, any incoming beam of light with respect to an incoming direction forming an angle comprise between 0 and 10° with respect to a normal of said surfaces.

By providing a code support with symbols represented by diffusive surfaces for incoming light beam, it is possible to enhance readings of the symbols for a given range of conditions, such characteristics allowing reliable readings in a difficult environment such those met in centrifugation beverage systems. Then, for example, it is possible for the symbols to be measured reliably by an optical device illuminating the support with an incoming light beam having an incoming direction forming an angle of 4° with respect to a normal of the surface of a symbol, and measuring the intensity of any reflected light beam having an outgoing direction forming an angle of 4° with respect to the surface of a symbol. By avoiding mainly specular reflections for a range of situations that are likely to be met in a centrifugation beverage system, the readings can be optimized.

- an outgoing beam with a reference intensity $E_{REF}$, in a direction forming an angle of 0° with respect to a normal of said first surface, when said incoming beam of light has an incoming direction forming an angle of 5° with respect to a normal of said first surface;

an outgoing beam with at least 60% of the reference intensity $E_{REF}$ in a direction forming an angle comprised between 3° and 6° with respect to a normal of said first surface, when said incoming beam of light has an incoming direction forming an angle comprised between 0° and 10° with respect to a normal of said first surface. In particular, in an embodiment, a plurality of the symbols are at least partly formed of a light reflecting surface, said light reflecting surface when illuminated by an incoming beam of light having a wavelength of sensibly 830nm, reflects:

- an outgoing beam with a reference intensity $E_{REF}$, in a direction forming an angle of 0° with respect to a normal of said first surface, when said incoming beam of light has an incoming direction forming an angle of 5° with respect to a normal of said first surface;

- an outgoing beam with at least 60% of the reference intensity $E_{REF}$ in a direction forming an angle comprised between 3° and 6° with respect to a normal of said first surface, when said incoming beam of light has an incoming direction forming an angle comprised between 0° and 10° with respect to a normal of said first surface.

Hence, such a code support presents optical characteristics that are well-known and defined for the light reflecting surface, said surface being generally the most reflective one. Hence, the diffusive reflectivity of the first surface is precisely defined for a given range of conditions, such characteristics allowing a reliable reading in a difficult environment such a centrifugational system. In fact, the relative intensity of the reflectivity of the light reflecting surface according to the incoming and outgoing directions gives an indication of its distribution in the space. By limiting the dispersion of this relative intensity for a known and defined range of conditions, it is possible to configure and to calibrate an optical reading device for reading the sequence of symbols. For example, it is possible for the light reflecting surface to be measured reliably by an optical device illuminating the support with an incoming light beam having an incoming direction forming an angle of 4° with respect to a normal of support, and measuring the intensity of any reflected light beam having an outgoing direction forming an angle of 4° with respect to a normal of support. Since many positioning errors may affect these measurements, notably caused by significant angular deviations due to particular mechanical constraints born by the rotating assembly of the machine and possibly coming from different origins (e.g., vibrations, wearing, unbalanced mass distribution, etc.) and manufacturing tolerances, it is particularly important that the reflectivity of the first symbol is chosen to tolerate such deviations and errors. The light reflecting symbol as defined has proven to be suitable to meet all these requirements.

Advantageously, the light reflecting surface, when illuminated by an incoming beam of light having a wavelength of sensibly 830nm, may reflect an outgoing beam with at least 72% of the reference intensity $E_{REF}$ in a direction forming an angle comprised between 3° and 4.4° with respect to a normal of said light reflecting surface, when said incoming beam of light have an incoming direction forming an angle comprised between 0° and 10° with respect to a normal of said first surface. In this embodiment, the level of reliability of measurements of the reflectivity of the light reflecting symbol is further enhanced.

In an embodiment, a plurality of the symbols are at least partly formed of a light absorbing surface. The light absorbing surface, when illuminated by an incoming beam of light having a wavelength of sensibly 830nm and an incoming direction forming an angle comprised between 0° and 10° with respect to a normal of said light absorbing surface, may reflect an outgoing beam an intensity smaller than 20% of the reference intensity $E_{REF}$. For example, the optical contrast between the light reflecting surface and the light absorbing surface, defined by the following mathematical expression $\frac{i1-i2}{i1+i2}$, where il, i2 represent respectively the intensity of the outgoing light reflected by the light reflecting, light absorbing symbol respectively in a same given configuration, is greater than 60%.

Hence, such a code support presents optical characteristics that are well-known and defined also for the light absorbing surface, said light absorbing surface being generally the less reflective one. Hence, the relative reflectivity of the light absorbing surface is defined relatively to the light reflecting surface for a given range of conditions, to ensure that the difference of reflectivity between the light reflecting and the light absorbing surface remains sufficient in all this range to achieve a reliable distinction between the light reflecting and the light absorbing surface. This is of a particular importance when the reading conditions remain specifically difficult for different reasons, such as because the incoming and outgoing rays of light must traverse the capsule holder when the capsule is held by the capsule holder, causing the loss of a great part of energy and/or because the light rays may incur significant angular deviations due to particular mechanical constraints born by the rotating assembly of the machine and possibly coming from different origins (e.g., vibrations, wearing, unbalanced mass distribution, etc.).

In an embodiment, the optically readable code support has an annulus shape with an inner radius of at least 24mm, and/or an outer radius of less than 28mm. The symbols may be arranged along a circle having a radius $R_s$ comprised between 24mm and 28mm. A width Hs of each symbol may be comprised between 1mm and 2.8mm.

In an embodiment, the sequence comprises at least 100 symbols. Each sequence may be arranged along at least a eighth of the circumference. All the symbols may be arranged along at least the half of the circumference, or, preferably, along the entire circumference.

As a consequence, it is possible to embedded an important quantity of information and/or enhance the reliability of decoding the sequence by including redundant information. Preferably, the sequence of symbols comprises between 100 and 200 symbols sequentially readable on the support. More preferably, it comprises between 140 and 180 symbols, most preferably 160 symbols. Each symbol forms preferably a rectangular or trapezoidal area covering an area having an arcuate sector lower than 5°, more preferably between 1.8° and 3.6°.

Hence, even if the surface illuminated by an optical reader used for reading the sequence has an area smaller than the area of one symbol, the measurement may be handled reliably, even if the particular mechanical constraints born by the rotating assembly of the machine and possibly coming from different origins (e.g., vibrations, wearing, unbalanced mass distribution, etc.) cause the capsule to be positioned inaccurately. This allows also a reader to deals with manufacturing inaccuracies more efficiently, in particular the eccentricity that may affect the shape and the positioning of the symbol on the capsule.

The surface occupied by each symbol may spread over an area having an angular sector inferior to 3.6 degrees. The surface occupied by each symbol may spread over an area having an angular sector greater than 1.8 degrees. Hence the width of the entity is well balanced between the density of information and the level reliability of readings.

In an embodiment, the code support comprises a base structure extending continuously at least along said sequence of symbols and discontinuous discrete light-absorbing portions locally applied onto or formed at the surface of said base structure. The discontinuous discrete light-absorbing portions form the light-absorbing surfaces and the base structure forms the light-reflective surfaces outside the surface areas occupied by the discrete light-absorbing portions. Said discrete light-absorbing portions are arranged to provide a lower light-reflectivity than the one of the base structure outside the surface areas occupied by the discrete light-absorbing portions.

tions.

Surprisingly, the proposed solution enables to improve the readability of the generated signal. Furthermore, it can form a structure which can be easily integrated to a capsule.

In particular, the light-reflective surfaces are obtained by a base structure of continuous arrangement, such as, for instance, forming an annular part of the flange-like rim of the capsule. It enables the use a larger choice of reflective packaging materials forming a sufficient thickness for a sufficiently good reflectivity. Materials for the base structure of the code support can form a part of the capsule and are prone to forming or moulding into a cup-shaped body of the capsule, for example. The overlying arrangement of the light-absorbing surfaces on the base structure, by way of discrete portions, enables to more distinctively produce a signal of lower reflectivity compared to the light-reflective signal, in particular, in an environment where potentially a major part of the light energy is lost during transfer from the machine to the capsule.

More particularly, the light-reflective base structure comprises metal arranged in the structure to provide the light reflective surfaces. In particular, the light-reflective base structure comprises a monolithic metal support layer and/or a layer of light-reflective particles preferably metal pigments in a polymeric matrix. When metal is used as part of the base structure, it can advantageously serve for providing both an effective reflective signal and a layer constituting part of the capsule which may confer a strengthening and/or protective function, for example, a gas barrier function. The metal is preferably chosen amongst the group consisting of: aluminium, silver, iron, tin, gold, copper and combinations thereof. In a more specific mode, the light-reflective base structure comprises a monolithic metal support layer coated by a transparent polymeric primer so as to form the reflective surfaces. The polymeric primer enables to level the reflecting surface of metal for an improved reflectivity and provides an improved bonding surface for the light absorbing portions applied thereon. The primer provides formability to the metal layer by reducing the wearing forces during forming. The primer also protects the metal layer from scratching or other deformation that could impact on the reflectivity of the surfaces. The transparency of the primer should be such that the loss of light intensity in the determined conditions through the layer is negligible. The primer also avoids a direct food contact with the metal layer. In an alternative, the base structure comprises an inner polymeric layer coated by an outer metallic layer (e.g., by vapor metallization of the polymeric layer). Preferably, the non-metallic transparent polymeric primer has thickness of less than 5 microns, most preferably a thickness between 0.1 and 3 microns. The thickness as defined provides a sufficient protection against direct food contact with metal and maintains, for enhanced reflectivity purpose, levels the surface irregularities of the metal and provides a glossy effect of the metal surface positioned underneath.

In a different mode, the light-reflective base structure comprises a monolithic metal support layer or polymeric support layer; said layer being coated by a lacquer comprising light-reflective particles, preferably metal pigments. The lacquer has a larger thickness than a primer so that it can advantageously contain reflective pigments. The lacquer has preferably a thickness higher than 3 microns and less than 10 microns, preferably comprised between 5 and 8 microns. The lacquer forms a light-reflective layer that improves the reflectivity of the metal layer positioned underneath. The reflectivity is dependent on the ratio of metal pigments to the polymer (in % by wt). The ratio of metal pigment can also be increased above wt. 10% for a non-metallic support layer to ensure the sufficient reflective properties of the base structure.

Both the primer and lacquer improve the formability of the metal layer by reducing the wearing forces during forming (e.g., deep drawing) thereby enabling to consider the code support as a formable structure to produce the body of the capsule. The chemical base of the primer or lacquer is preferably chosen amongst the list of: polyester, isocyanate, epoxy and combinations thereof. The application process of the primer or lacquer on the support layer depends on the thickness of the polymeric layer and the ratio of pigments in the film since such ratio influences the viscosity of the polymer. For example, the application of the primer or lacquer on the metal layer can be made by solvation, for example, by applying the metal layer with a polymeric containing solvent and submitting the layer to a temperature above the boiling point of the solvent to evaporate the solvent and enabling curing of the primer or lacquer and to fix it onto the metal layer.

Preferably, the discontinuous light-absorbing portions are formed by an ink applied onto the said base structure. The ink has preferably a thickness between 0.25 and 3 microns. Several ink layers can be applied to form the light-absorbing portions, of, for instance, 1 micron-thick, to provide several printed ink layers in a register. The ink portions reflects a lower light intensity compared to the reflective surfaces formed by the base structure. For the light-absorbing portions, the ink preferably comprises at least 50% by weight of pigments, more preferably about 60% by weight. The pigments are chosen amongst those essentially absorbing light at sensibly 830-850 nm of wavelength. Preferred pigments are black pigments or colour (non-metallic) pigments. As a matter of example, colour pigments used in colour pantone codes: 201C, 468C, 482C, 5743C, 7302C or 8006C, have provided satisfactory results. The application of ink to form the light-absorbing portions on the base structure can be obtained by any suitable process such as stamping, roto-engraving, photo-engraving, chemical treatment or offset printing.

In another mode, the discontinuous light-absorbing portions forms roughened surfaces of the base structure. having a rugosity (Rz) of at least 2 microns, preferably between 2 and 10 microns, most preferably of about 5 microns. On the contrary, the light-reflective surfaces can be obtain by mirroring surfaces having a lower rugosity than the rugosity of the discontinuous light-absorbing portions. More particularly, the mirroring surfaces of the base structure are below 5 microns, preferably comprised between 0.2 and 2 microns. As known per se, the rugosity (Rz) is the arithmetic mean value of the single roughness depths of consecutive sampling lengths, where Z is the sum of the height of the highest peaks and the lowest valley depth within a sampling length.

The roughened surface portions can preferably be formed by applying a roughened layer of ink on the base structure. The roughness of the layer of ink is determined by its rugosity (Rz) at the surface of the layer after drying.

The roughened surface of the base structure can also be obtained by any suitable technique such as sanding, shot blasting, milling, laser engraving, in-mould forming and combinations thereof. For instance, the roughness can also be obtained by applying onto the base structure, a polymeric lacquer containing mat pigments to provide the desired rugosity. The light-absorbing lacquer can be applied, for example, on the whole surface of the base structure and be locally removed to uncover the reflective surfaces formed by the metal layer, e.g., aluminium, underneath, such as by burning with said lacquer, using a laser or any equivalent means.

In an alternative, the respectively roughened surfaces for the absorbing surfaces and mirror surfaces for the reflective surfaces can be formed by in-mould forming. For example, it requires the use of a mould cavity comprising selectively positioned roughened surfaces and mirror surfaces and forming such base structure having such mirror and roughened surfaces, such as by injection-moulding.

According to a second aspect, the invention relates to a capsule for delivering a beverage in a beverage producing device by centrifugation, the capsule comprising a flange-like rim, the flange-like rim comprising an optically readable code support according to the first aspect. According to a third aspect, the invention relates to a system for preparing a beverage from a capsule according to the second aspect, the system comprising the capsule and a beverage preparation device; wherein the beverage preparation device comprises a capsule holding means for holding the capsule and a rotational drive means for driving the holding means and capsule in rotation along said axis of rotation; the beverage preparation devices further comprising an optical reading arrangement configured for reading the symbols represented on the optically readable code support by:

- measuring a reflectivity and/or a contrast of an illuminated area of the code support, said area being smaller than the area occupied by the symbols ;

- driving the rotational drive means so as the capsule performs a complete revolution.

In particular, the capsule holding means may be at least partially transparent, and the optical reading arrangement may be configured for measuring the reflectivity and/or the contrast of an illuminated area of the code support, through the capsule holding means.

According to a fourth aspect, the invention relates to a method for reading the symbols arranged on the code support of a capsule according to the second aspect, in a beverage preparation device, said beverage preparation device comprising capsule holding means for holding the capsule and rotational drive means for driving the holding means and capsule in rotation along said axis of rotation; the beverage preparation devices further comprising an optical reading arrangement. The method comprises the following steps:

- measuring a reflectivity and/or a contrast of an illuminated area of the code support, said area being smaller than the area occupied by the symbols ;
- driving the rotational drive means so as the capsule performs a complete revolution.

**Brief description of the figures**

The present invention will be better understood thanks to the detailed description which follows and the accompanying drawings, which are given as non-limiting examples of embodiments of the invention, namely:

- figure 1 illustrates the basic principle of the centrifugal extraction,
- figure 2a, 2b illustrate an embodiment of the centrifugal cell with a capsule holder;
- figure 3a, 3b, 3c illustrate an embodiment of a set of capsules according to the invention;
- figure 4 illustrates an embodiment of a code support according to the invention;
- figure 5 illustrates an alternate position of the sequence on the capsule, in particular, when placed on the underside of the rim of the capsule, and the capsule fitted into a capsule holder of the extraction device,
- figure 6 illustrates by a schema an optical bench used to measure symbols on an embodiment of a capsule according to the invention;
- figure 7 show a diagram of the relative diffuse reflectivity of the symbols of an embodiment of a capsule according to the invention, as a function of the source and detector angles;
- figure 8 show a diagram of the contrast between symbols of an embodiment of a capsule according to the invention, as a function of the source and detector angles;
- figure 9 is a first example of an optically readable coded support along circumferential cross-section view in radial direction R at the rim of the capsule of figure 4,
- figure 10 is a second example of an optically readable coded support along circumferential cross-section view in radial direction R at the rim of the capsule of figure 4,
- figure 11 is a third example of an optically readable coded support in circumferential cross-section view in radial direction R at the rim of the capsule of figure 4,
- figures 12 to 14 illustrate graphical representations of the measure of reflectivity in % respectively for optically readable code supports according to the invention and for another comparative code support.

**Detailed description**

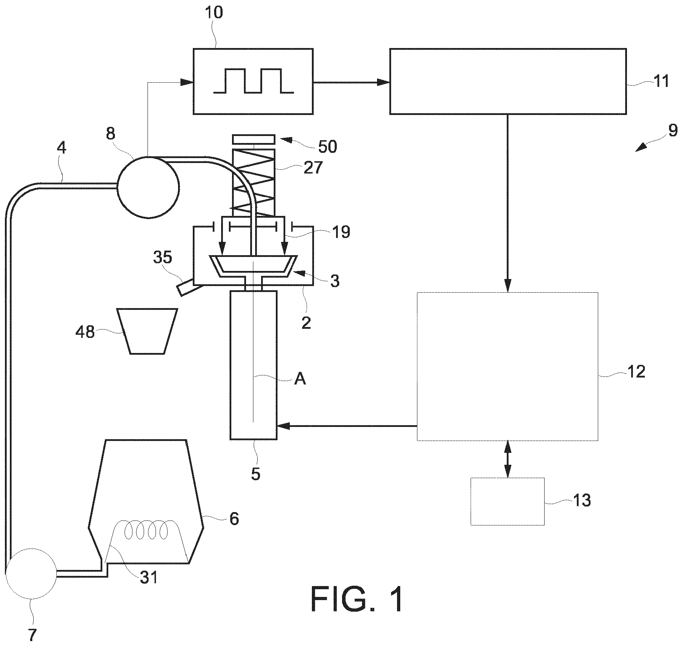

Figure 1 illustrates an example of a beverage preparation system 1 as described in WO2010/026053 for which the capsule of the invention can be used.

The centrifugal unit 2 comprises a centrifugal cell 3 for exerting centrifugal forces on the beverage ingredient and liquid inside the capsule. The cell 3 may comprise a capsule holder and a capsule received therein. The centrifugal unit is connected to driving means 5 such as a rotary motor. The centrifugal unit comprises a collecting part and an outlet 35. A receptacle 48 can be disposed below the outlet to collect the extracted beverage. The system further comprises liquid supply means such as a water reservoir 6 and a fluid circuit 4. Heating means 31 may also be provided in the reservoir or along the fluid circuit. The liquid supply means may further comprise a pump 7 connected to the reservoir. A flow restriction means 19 is provided to create a restriction to the flow of the centrifuged liquid which leaves the capsule. The system may further comprise a flow meter such as a flow-metering turbine 8 for providing a control of the flow rate of water supplied in the cell 3. The counter 11 can be connected to the flow-metering turbine 8 to enable an analysis of the generated impulse data 10. The analysed data is then transferred to the processor 12. Accordingly, the exact actual flow rate of the liquid within the fluid circuit 4 can be calculated in real-time. A user interface 13 may be provided to allow the user to input information that is transmitted to the control unit 9. Further characteristics of the system can be found in WO2010/026053.

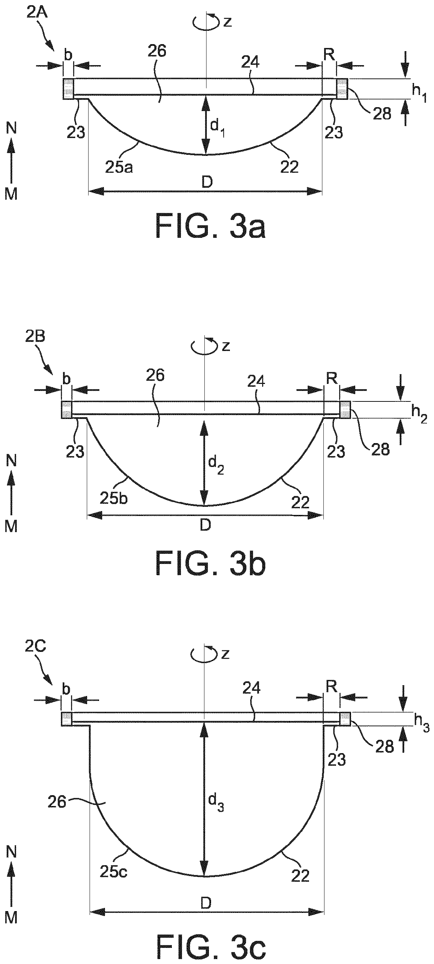

Figures 3a, 3b and 3c relate to an embodiment of a set of capsules 2A, 2B, 2C. The capsules preferably comprise a body 22, a rim 23 and an upper wall member respectively a lid 24. The lid 24 may be a perforable membrane or an aperture wall. Thereby the lid 24 and the body 22 enclose an enclosure respectively ingredients compartment 26. As shown in the figures, the lid 24 is preferably connected onto an inner annular portion R of the rim 23 that is preferably between 1 to 5 mm.

The rim is not necessarily horizontal as illustrated. It can be slightly bended. The rim 23 of the capsules preferably extends outwardly in a direction essentially perpendicular (as illustrated) or slightly inclined (if bended as aforementioned) relative to the axis of rotation Z of the capsule. Thereby, the axis of rotation Z represents the axis of rotation during centrifugation of the capsule in the brewing device, and in particular is sensibly identical to the axis of rotation Z of the capsule holder 32 during centrifugation of the capsule in the brewing device.

It should be understood that the shown embodiment is just an exemplary embodiment and that the capsules in particular the capsule body 22 can take various different embodiments.

The body 22 of the respective capsule has a single convex portion 25a, 25b, 25c of variable depth, respectively, d1, d2, d3. Thereby, the portion 25a, 25b, 25c may as well be a truncated or a partially cylindrical portion.

Hence, the capsules 2A, 2B, 2C preferably comprise different volumes but, preferably, a same insertion diameter 'D'. The capsule of figure 3a shows a small volume capsule 2A whereas the capsule of figure 3b and 3c show a larger volume capsule 2B respectively 2C. The insertion diameter 'D' is hereby determined at the line of intersection between the lower surface of the rim 23 and the upper portion of the body 22. However, it could be another referencing diameter of the capsule in the device.

The small volume capsule 2A preferably contains an amount of extraction ingredient, e.g., ground coffee, smaller than the amount for the large volume capsules 2B, 2C. Hence, the small capsule 2A is intended for delivery of a short coffee of between 10 ml and 60 ml with an amount of ground coffee comprised between 4 and 8 grams. The larger capsules 2B is intended for delivery of a medium-size coffee, e.g., between 60 and 120 ml and the largest capsule is intended for delivery of a long-size coffee, e.g., between 120 and 500 ml. Furthermore, the medium-size coffee capsule 2B can contain an amount of ground coffee comprised between 6 and 15 grams and the long-size coffee capsule 2C can contain an amount of ground coffee between 8 and 30 grams.

In addition, the capsules in the set according to the invention may contain different blends of roast and ground coffee or coffees of different origins and/or having different roasting and/or grinding characteristics.

The capsule is designed for rotating around the axis Z. This axis Z crosses perpendicularly the center of the lid which has the form of a disk. This axis Z exits at the center of the bottom of the body. This axis Z will help to define the notion of "circumference" which is a circular path located on the capsule and having the axis Z as reference axis. This circumference can be on the lid, e.g. lid or on the body part such as on the flange-like rim. The lid may be impervious to liquid before insertion in the device or it may be pervious to liquid by means of small openings or pores provided in the center and/or periphery of the lid.

Hereafter, the lower surface of the rim 23 refers to the section of the rim 23 that is located outside the enclosure formed by the body and the lid, and is visible when the capsule is oriented on the side where its body is visible.

Further characteristics of the capsules or the set capsules can be found in documents WO 2011/0069830, WO 2010/0066705, or WO2011/0092301.

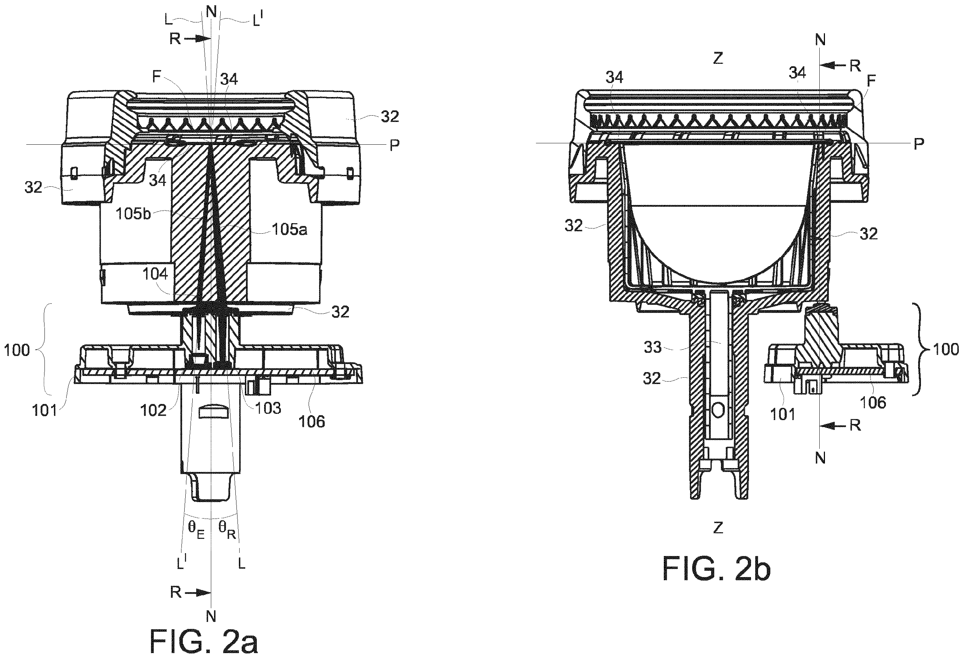

An embodiment of the centrifugal cell 3 with a capsule holder 32 is illustrated by Figures 2a and 2b. The capsule holder 32 forms in general a cylindrical or conical wide shaped cavity provided with an upper opening for inserting the capsule and a lower bottom closing the receptacle. The opening has a diameter slightly larger than the one of the body 22 of the capsule. The outline of the opening fits to the outline of the rim 23 of the capsule configured to lean on the edge of the opening when the capsule is inserted. As a consequence, the rim 23 of the capsule rests at least partially on a receiving part 34 of the capsule holder 32. The lower bottom is provided with a cylindrical shaft 33 attached perpendicularly to the center of the external face of the bottom. The capsule holder 32 rotates around the central axis Z of the shaft 33.

An optical reading arrangement 100 is also represented in figure 2a and 2b. The optical reading arrangement 100 is configured to deliver an output signal comprising information related to a level of reflectivity of a surface of the lower surface of the rim 23 of a capsule leaning on the receiving part 34 of the capsule holder 32. The optical reading arrangement is configured to perform optical measurements of the surface of the lower surface of the rim 23 through the capsule holder 32, more particularly through a lateral wall of the cylindrical or conical wide shaped capsule holder 32. Alternatively, the output signal may contain differential information, for instance differences of reflectivity over time, or contrast information. The output signal may be analog, for example a voltage signal varying with the information measured over the time. The output signal may be digital, for example a binary signal comprising numerical data of the information measured over the time.

In the embodiment of figure 2a and 2b, the reading arrangement 100 comprises a light emitter 103 for emitting a source light beam 105a and a light receiver 102 for receiving a reflected light beam 105b.

Typically the light emitter 103 is a light-emitting diode or a laser diode, emitting an infrared light, and more particularly a light with a wavelength of 850nm. Typically, the light receiver 103 is a photodiode, adapted to convert a received light beam into a current or voltage signal.

The reading arrangement 100 comprises also processing means 106 including a printed circuit board embedding a processor, sensor signal amplifier, signal filters and circuitry for coupling said processing means 106 to the light emitter 103, the light receiver 102 and to the control unit 9 of the machine.

The light emitter 103, the light receiver 102, and the processing means 106 are maintained in a fixed position by a support 101, rigidly fixed relatively to the machine frame. The reading arrangement 100 stays into its position during an extraction process and is not driven into rotation, contrary to the capsule holder 32.

In particular, the light emitter 103 is disposed so as the source light beam 105a is generally oriented along a line L crossing at a fixed point F the plane P comprising the receiving part 34 of the capsule holder 32, said plane P having a normal line N passing through the point F. The fixed point F determines an absolute position in space where the source light beams 105a is intended to hit a reflective surface: the position of the fixed point F remains unchanged when the capsule holder is rotated. The reading arrangement may comprise focusing means 104, using for example holes, lenses and/or prisms, to make the source light beam 105 converging more efficiently to the fixed point F of the lower surface of the lid of a capsule positioned into the capsule holder 32. In particular, the source light beam 105 may be focused so as to illuminate a disc centered sensibly on the fixed point F and having a diameter d.

The reading arrangement 100 is configured so as the angle $\theta_E$ between the line L and the normal line N is comprised between 2° and 10°, and in particular between 4° and 5° as shown in figure 2a. As a consequence, when a reflecting surface is disposed at the point F, the reflected light beam 105b is generally oriented along a line L', crossing the fixed point F, the angle $\theta_R$ between the line L' and the normal line N being comprised between 2° and 10°, and in particular between 4° and 5° as shown in figure 2a. The light receiver 102 is disposed on the support 101 so as to gather at least partially the reflected light beam 105b, generally oriented along the line L'. The focusing means 104 may also be arranged to make the reflected light beam 105b concentrating more efficiently to the receiver 102. In the embodiment illustrated in figure 2a, 2b, the point F, the line L and the line L' are co-planar. In another embodiment, the point F, the line L and the line L' are not co-planar: for instance, the plane passing through the point F and the line F and the plane passing through the point F and the line L' are positioned at an angle of sensibly 90°, eliminating direct reflection and allowing a more robust reading system with less noise.

The capsule holder 32 is adapted to allow the partial transmission of the source light beam 105a along the line L up to the point F. For instance, the lateral wall forming the cylindrical or conical wide shaped cavity of the capsule holder is configured to be non-opaque to infra-red lights. Said lateral wall can be made of a plastic based material which is translucent to infra-red having entry surfaces allowing infra-red light to enter.

As a consequence, when a capsule is positioned in the capsule holder 32, the light beam 105a hits the bottom part of the rim of said capsule at point F, before forming the reflected light beam 105b. In this embodiment, the reflected light beam 105b passes through the wall of the capsule holder up to the receiver 102.

The section of the lower surface of the rim 23 of a capsule positioned into the capsule holder 32, illuminated at the point F by the source light beam 105, changes over the time, only when the capsule holder 32 is driven into rotation. So, a complete revolution of the capsule holder 32 is required for the source light beam 105 to illuminate the entire annular section of the lower surface of the rim.

The output signal may be computed or generated by measuring over the time the intensity of the reflected light beam, and possibly, by comparing its intensity to those of the source light beam. The output signal may be computed or generated by determining the variation over the time of the intensity of the reflected light beam.

The capsule according to the invention comprises at least one optically readable code support. The code support can be, in the present part of the flange-like rim. Symbols are represented on the optically code support. The symbols are arranged in at least one sequence, said sequence code a set of information related to the capsule. Typically, each symbol corresponds to a specific binary value: a first symbol may represent a binary value of '0', whereas a second symbol may represent a binary value of '1'.

In particular, the set of information of at least one of the sequences may comprise information for recognizing a type associated to the capsule, and/or one or a combination of items of the following list:

- information related to parameters for preparing a beverage with the capsule, such as the optimal rotational speeds, temperatures of the water entering the capsule, temperatures of the collector of the beverage outside the capsule, flow rates of the water entering the capsule, sequence of operations during the preparation process, etc;

- information for retrieving locally and/or remotely parameters for preparing a beverage with the capsule, for example an identifier allowing the recognition of a type for the capsule;

- information related to the manufacturing of the capsule, such a production batch identifier, a date of production, a recommended date of consumption, an expiration date, etc;

- information for retrieving locally and/or remotely information related to the manufacturing of the capsule.

Each set of information of at least one of the sequences may comprise redundant information. Hence, error-checking may be performed by comparison. It also improves by the way the probability of a successful reading of the sequence, should some parts of the sequence be unreadable. The set of information of at least one of the sequences may also comprise information for detecting errors, and/or for correcting errors in said set of information. Information for detecting errors may comprise repetition codes, parity bits, checksums, cyclic redundancy checks, cryptographic hash function data, etc. Information for correcting errors may comprise error-correcting codes, forward error correction codes, and in particular, convolutional codes or block codes.

The symbols arranged in sequences are used to represent data conveying the set of information related to the capsule. For instance, each sequence may represent an integer number of bits. Each symbol may encode one or several binary bits. The data may also be represented by transitions between symbols. The symbols may be arranged in the sequence using a modulation scheme, for example a line coding scheme like a Manchester coding.

Each symbol may be printed and/or embossed. Each symbol may be obtained by treating the code support to have a given roughness. The shape of the symbols may be chosen amongst the following non-exhaustive list: arch-shaped segments, segments which are individually rectilinear but extend along at least a part of the section, dots, polygons, geometric shapes.

In an embodiment, each sequence of symbols has a same fixed length, and more particularly has a fixed number of symbols. The structure and/or pattern of the sequence being known, it may ease the recognition of each sequence by the reading arrangement.

In an embodiment, at least one preamble symbol is represented in the section, so as to allow the determination of a start and/or a stop position in the section of each sequence. The preamble symbol is chosen to be identified separately from the other symbols. It may have a different shape and/or different physical characteristics compared with the other symbols. Two adjacent sequences may have a common preamble symbol, representing the stop of one sequence and the start of the other one.

In an embodiment, at least one of the sequences comprises symbols defining a preamble sequence, so as to allow the determination of a position of the symbols in said sequence code the set of information related to the capsule. The symbols defining a preamble may code a known reserved sequence of bits, for example '10101010'.

In an embodiment, the preamble symbols and/or the preamble sequences comprise information for authentifying the set of information, for example a hash code or a cryptographic signature.

The symbols are distributed sensibly on at least 1/8th of the circumference of the annular support, preferably, on the entire circumference of the annular support. The code may comprise successive arch-shaped segments. The symbols may also comprise successive segments which are individually rectilinear but extend along at least a part of the circumference.

The sequence is preferably repeated along the circumference in order to ensure a reliable reading. The sequence is repeated at least twice on the circumference. Preferably, the sequence is repeated three to six times on the circumference. Repetition of the sequence means that the same sequence is duplicated and the successive sequences are positioned in series along the circumference so that upon a 360-degree rotation of the capsule, the same sequence can be detected or read more than one time.

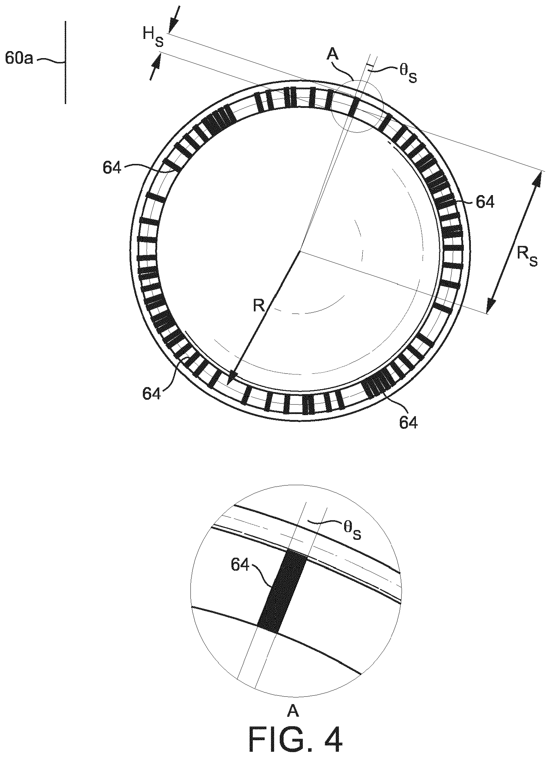

Referring to figure 4, an embodiment 60a of a code support is illustrated. The code support 60a occupies a defined width of the rim 23 of the capsule. The rim 23 of the capsule can comprise essentially an inner annular portion forming the support 60a and an outer (non-coded) curled portion. However, it can be that the full width of the rim is occupied by the support 60a, in particular, if the lower surface of the rim can be made substantially flat. This location is particularly advantageous since they offer both a large area for the symbols to be disposed and is less prone to damages caused by the processing module and in particular by the pyramidal plate, and to ingredients projections. As a consequence, the amount of coded information and the reliability of the readings are both improved.

In the embodiment illustrated on figure 4, the support 60a has an annulus shape centered on the axis Z of the capsule, with an inner radius of 24.7mm and an outer radius of 27.5mm. The mean radius R of the support 60a is equal to 26.1mm. The symbols are positioned along a circle having a radius $R_s$ equal to 26.1mm. The maximum value of the width Hs of each symbol is then equal to 2.8mm. The code support 60a comprises 160 symbols, each symbol coding 1 bit of information. The symbols being contiguous, each symbol has an arc-linear length $\theta_s$ of 2.25°.

In another embodiment (not represented), the support 60a has an annulus shape centered on the axis Z of the capsule, with an inner radius of 24.7mm and an outer radius of 27.5mm. The mean radius R of the support 60a is equal to 26.1mm. The symbols are positioned along a circle having a radius $R_s$ equal to 26.1mm. The maximum value of the width Hs of each symbol is then equal to 2.8mm. The code support 60a comprises 140 symbols, each symbol coding 1 bit of information. The symbols being contiguous, each symbol has an arc-linear length $\theta_s$ of 2.5714°.

In another embodiment (not represented), the support 60a has an annulus shape centered on the axis Z of the capsule, with an inner radius of 24.7mm and an outer radius of 27.5mm. The mean radius R of the support 60a is equal to 26.1mm. The symbols are positioned along a circle having a radius $R_s$ equal to 26.1mm. The maximum value of the width Hs of each symbol is then equal to 2.8mm. The code support 60a comprises 112 symbols, each symbol coding 1 bit of information. The symbols being contiguous, each symbol has an arc-linear length $\theta_s$ of 3.2143°.

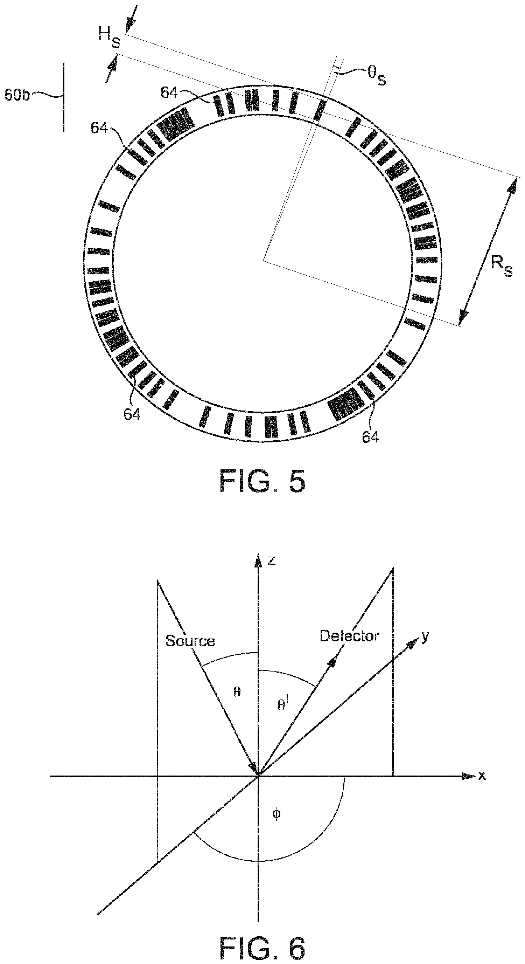

Referring to figure 5, an embodiment 60b of a code support is illustrated in planar view. The code support 60b is adapted to be associated with or be part of a capsule, so as to be driven in rotation when the capsule is rotated around its axis Z by the centrifugal unit 2. The receiving section of the capsule is the lower surface of the rim 23 of the capsule. As illustrated on figure 5, the code support may be a ring having a circumferential part on which the at least one sequence of symbols is represented, so as the user can position it on the circumference of the capsule before introducing it into the brewing unit of the beverage machine. Consequently, a capsule without embedded means for storing information can be modified by mounting such a support so as to add such information. When the support is a separate part, it may be simply added on the capsule without additional fixing means, the user ensuring that the support is correctly positioned when entering the brewing unit, or the forms and the dimensions of the support preventing it from moving relatively to the capsule once mounted. The code support 60b may also comprise additional fixing means for rigidly fixing said element to the receiving section of the capsule, like glue or mechanical means, to help the support staying fixed relatively to the capsule once mounted. As also mentioned, the code support 60b may also be a part of the rim itself such as integrated to the structure of the capsule.

In the embodiment illustrated on figure 5, the support 60b has an annulus shape with an inner radius of 24.7mm and an outer radius of 27.5mm. The mean radius R of the support 60b is equal to 26.1mm. The symbols are positioned along a circle having a radius $R_s$ equal to 26.1mm. The maximum value of the width Hs of each symbol is then equal to 2.8mm. The code support 60b comprises 160 symbols, each symbol coding 1 bit of information. The symbols being contiguous, each symbol has an arc-linear length $\theta_s$ of 2.25°.

In another embodiment (not represented), the support 60b has an annulus shape, with an inner radius of 24.7mm and an outer radius of 27.5mm. The mean radius R of the support 60a is equal to 26.1mm. The symbols are positioned along a circle having a radius $R_s$ equal to 26.1mm. The maximum value of the width Hs of each symbol is then equal to 2.8mm. The code support 60b comprises 140 symbols, each symbol coding 1 bit of information. The symbols being contiguous, each symbol has an arc-linear length $\theta_s$ of 2.5714°.

In another embodiment (not represented), the support 60b has an annulus shape centered on the axis Z of the capsule, with an inner radius of 24.7mm and an outer radius of 27.5mm. The mean radius R of the support 60b is equal to 26.1mm. The symbols are positioned along a circle having a radius $R_s$ equal to 26.1mm. The maximum value of the width Hs of each symbol is then equal to 2.8mm. The code support 60b comprises 112 symbols, each symbol coding 1 bit of information. The symbols being contiguous, each symbol has an arc-linear length $\theta_s$ of 3.2143°.

Each symbol is adapted to be measured by the reading arrangement 100 when the capsule is positioned into the capsule holder and when said symbol is aligned with the source light beam 105a at point F. More particularly, each different symbol presents a level of reflectivity of the source light beam 105a varying with the value of said symbol. Each symbol has different reflective and/or absorbing properties of the source light beam 105a.

Since the reading arrangement 100 is adapted to measure only the characteristics of the illuminated section of the coding support, the capsule has to be rotated by the driving means until the source light beam has illuminated all the symbols comprised in the code. Typically, the speed for reading the code can be comprised between 0.1 and 2000 rpm.

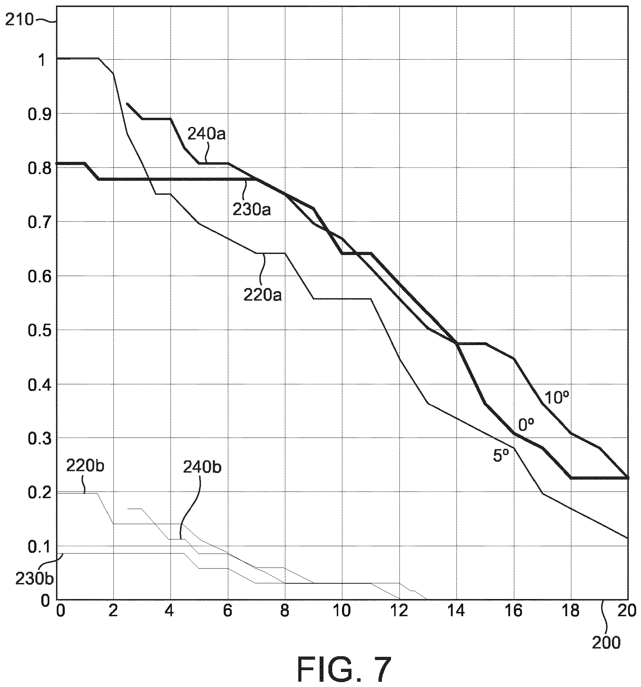

The reflective characteristics of the code support of the invention are determined in defined laboratory conditions. In particular, a first symbol and a second symbol of an embodiment of a capsule that are suitable to be read reliably by the reading arrangement 100 have been measured independently using an optical bench represented on figure 6. The goniometric measurements of diffuse reflection of said symbols on the capsule are shown on figures 7 (reflected intensity of each symbol) and 8 (contrast between symbols).

Hereafter, the first symbol is more reflective than the second symbol. The set-up for the measurement of the diffuse reflected relative intensity of each symbol is built so as to able to modify independently the angle $\theta$ of a light source and the angle $\theta'$ of a light detector. The detector is a bare optical fiber connected to a powermeter glued to a very fine mechanical tip which is fixed to the motorized detector arm. For all measurements, the angle $\Phi$ between the source and detector planes is equal to $\Phi$ = 90°. The light source is a laser diode emitting a light having a wavelength $\lambda$ = 830 nm.

The diagram on figure 7 shows a relative diffuse reflectivity (axis 210) of the symbols of the capsule as a function of the detector angle $\theta'$ (axis 200). A reference intensity $E_{REF}$ of reflectivity is measured for the first symbol, with the detector angle set to 0° and the source angle set to 5°. The relative diffuse reflectivity of each symbol is calculated relatively to the reference intensity $E_{REF}$. The curves 220a, 230a, 240a shows respectively the relative diffuse reflectivity of the first symbol, at three different source angles $\theta$ = 0°, 5°, 10°. The curves 220b, 230b, 240b shows respectively the relative diffuse reflectivity of the second symbol, at three different source angles $\theta$ = 0°, 5°, 10°.

The relative diffuse reflectivity represents at least 60% of the reference intensity $E_{REF}$ for any value of the detector angle $\theta'$ comprises between 3° and 6° and for any value of the source angle $\theta$ comprises between 0° to 10°. In particular, the relative diffuse reflectivity represents at least 72% of the reference intensity $E_{REF}$ for any value of the detector angle $\theta'$ comprises between 2.5° and 4.4° and for any value of the source angle $\theta$ comprises between 0° to 10°.

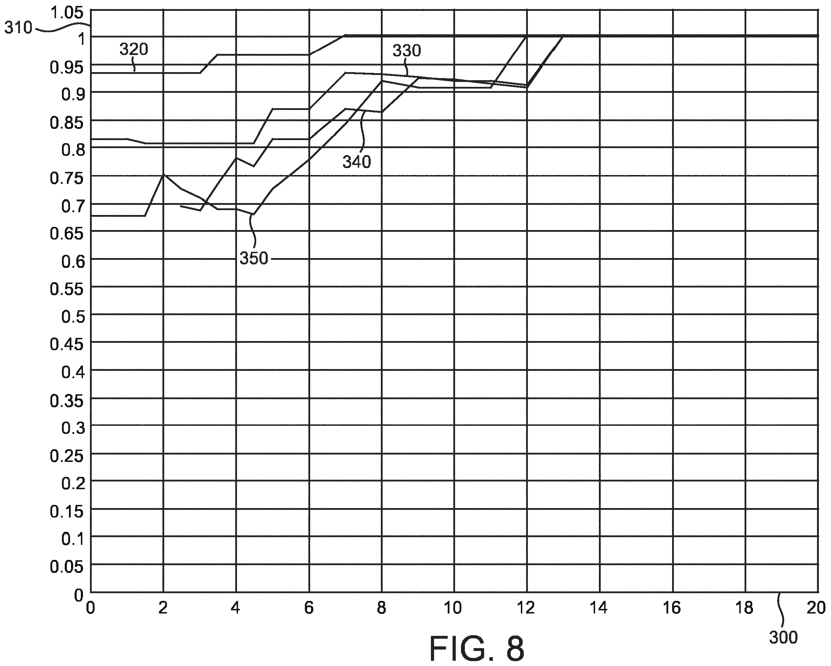

The diagram on figure 8 shows the optical contrast (axis 310) between the first and the second symbols as a function of detector angle θ' (axis 300). The optical contrast is defined by the following mathematical expression $\frac{i1-i2}{i1+i2}$, where i1, i2 represent respectively the intensity reflected by the first, second symbol respectively to the detector, in a same given configuration of the angles θ and θ'. The curves 320, 330, 340, 350 show respectively, at four different source angles θ = 0°, 5°, 10°, 15°, said optical contrast. The lowest contrast value is in any case is greater than 65%, which allows reliable signal processing. In particular, the optical contrast is greater than 80% for any value of the detector angle θ' comprises between 2.5° and 4.4° and for any value of the source angle θ comprises between 10° to 15°. In particular, the optical contrast is greater than 75% for any value of the detector angle θ' greater than 6° and for any value of the source angle θ comprises between 0° to 15°.

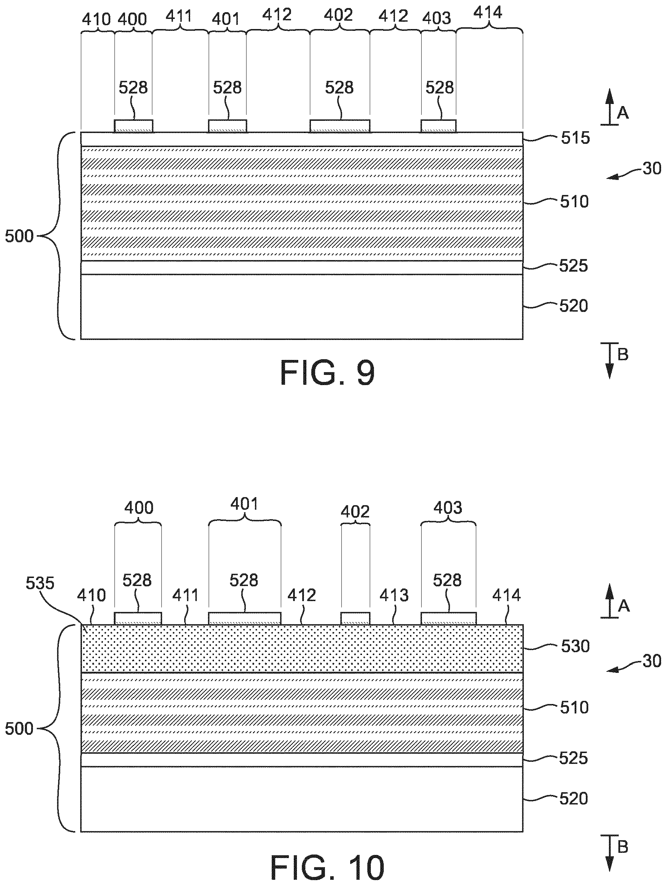

Figure 9 illustrates a preferred mode of an optical readable code support 30 of the invention in cross-sectional circumferential view of figure 4. The code support 30 comprises a readable (external) side A and a non-readable (internal) side B. At its readable side A, the support comprises successive light-reflective surfaces 400-403 and light-absorbing surfaces 410-414. The light absorbing surfaces 410-414 are formed by a base structure 500 which comprises several superimposed layers whereas the light absorbing surfaces 400-403 are formed by overlying on the base structure in local circumferential areas, discontinuous discrete portions of light absorbing material, preferably discrete portions of ink layers 528, applied onto the base structure. The base structure comprises a preferably monolithic layer of metal 510, preferably aluminium (or an alloy of aluminium) onto which is coated a transparent polymeric primer 515, preferably made of isocyanate or polyester. The thickness of metal, e.g., aluminium layer, can be a determining factor for the formability of the support into a containment structure of the capsule (e.g., body and rim).. For formability reasons, the aluminium layer is preferably comprised between 40 and 250 microns, most preferably between 50 and 150 microns. Within these ranges, the aluminium thickness may also provide gas barrier properties for preserving the freshness of the ingredient in the capsule, in particular, when the capsule further comprises a gas barrier membrane sealed onto the rim.

The code support may be formed from a laminate which is deformed to form the rim 22 and body 23 of the capsule (figures 3a-3b). In such case, the laminate has the composition of the base structure 500 and is printed with the light-absorbing ink portions 400-403 in the flat configuration before the forming operation of the capsule (e.g., body, rim). The printing of the ink portions must thus take into effect the subsequent deformation of the laminate so that it enables a precise positioning of the coded surfaces. The type of ink can be a mono-component, bi-component, PVC based or PVC-free based inks.

The black ink is preferred as it provides a lower reflectivity and higher contrast than coloured inks. However, the black ink portions could be replaced by equivalent coloured ink portions, preferably dark or opaque inks. The ink may comprise, for instance, 50-80% wt. of colour pigments.

Preferably, the metal layer is aluminium and has a thickness comprised between 6 and 250 microns. The primer enables to level the rugosity of the metal (i.e., aluminium) layer. It also improves the bonding of the inks on the metal layer, in particular, aluminium. The primer must remain relatively thin to diminish the diffusion of the light beam. Preferably, the thickness of the primer is comprised between 0.1 and 5 microns, most preferably between 0.1 and 3 microns. The density of the primer is preferably comprised between 2 and 3 gsm, for example, is of about 2.5 gsm.

Optionally, the base structure may comprises additional layers, on the non readable side, preferably a polymer layer such as polypropylene or polyethylene and an adhesive layer 525 for bonding the polymer layer 520 onto the metal layer 510 or heat seal lacquer enabling sealing of lid or membrane on the rim of the capsule or an internal protective lacquer or varnish. The support as defined can form an integrated part of the capsule, e.g., of the capsule flange-like rim and body.

A preferred base structure according to the mode of figure 9, comprise respectively from the B side to the A side of the support: a polypropylene layer of 30 microns, an adhesive, an aluminium layer of 90 microns, a polyester layer of 2 microns and density of 2.5 gsm and black ink portions of 1 micron. In an alternative mode, the primer layer is replaced by a lacquer of thickness 5 microns, preferably a density of 5.5 gsm, and containing 5% (wt.) metal pigments.

Figure 10 relates to a another mode of the code support 30 of the invention. In this case, the base structure comprises a lacquer 530 replacing the primer 510 of figure 9. The lacquer is a polymeric layer embedding metallic pigments 535 such as aluminium, silver or copper pigments. The thickness of the lacquer is somewhat greater than the thickness of the primer 510 of figure 9, preferably, comprised between 3 and 8 microns, most preferably between 5 and 8 microns. The metallic pigments enable to compensate for the reduction of the reflectivity of the metal layer by the increased thickness of the polymer. The lacquer also levels the rugosity of the metal layer. Preferably, the ratio of metallic pigments to lacquer is of at least 1% in weight, more preferably is comprised between 2 and 10 % in weight.

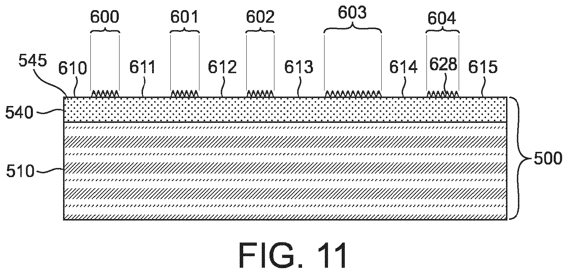

Figure 11 relates to another mode of the code support 30 of the invention. In this case, the base structure 500 comprises a metal and/or polymer layer 540 having mirror surfaces 610-615 and roughened surfaces 600-604. The mirror surfaces 610-615 may be obtained by providing a rugosity Rz lower than 5 microns, preferably comprised between 0.2 and 2 microns. The light-absorbing surfaces 600-604 are obtained by forming roughened surface portions with a rugosity Rz higher than 2 microns and more preferably higher than 5 microns. For example, the mirror surfaces are formed in a polymeric layer 540, such as polyester or isocyanate, including metal pigments 545. The roughened surfaces of the base structure can be obtained by any suitable technique such as sanding, shot blasting, milling, laser engraving, chemical attack and combinations thereof. The ratio of pigments in the polymeric layer 540 may be of at least 5% in weight, preferably between 10 and 30% in weight. A support layer 510 can be provided which is preferably a metal layer such as aluminium. It should be noted that layers 510 and 540 could be replaced by a single metal or polymeric layer.

In the present invention, the reference to specific metals encompasses the possible alloys of such metals in which the metal represents the major component in weight, for instance, aluminium encompasses alloys of aluminium.

**Examples:**

Capsules comprising an integrated code support have been tested to evaluate the level of reflectivity of the signal (bit 1 / bit 0). The tests were performed in a simplified configuration of the device of figures 2a and 2b with the capsule holder 32 removed and replaced by a transparent clamping plate holding the rim of the capsule and provided with an open air passage for the light beams. The angle between the sender path and receiver path was of 8°, distributed with 4° on each side of the normal axis N.

**Example 1** - **Detectable code with light-reflective surfaces by the base structure with coloured lacquer and light-absorbing surfaces by the overlying ink portions.**

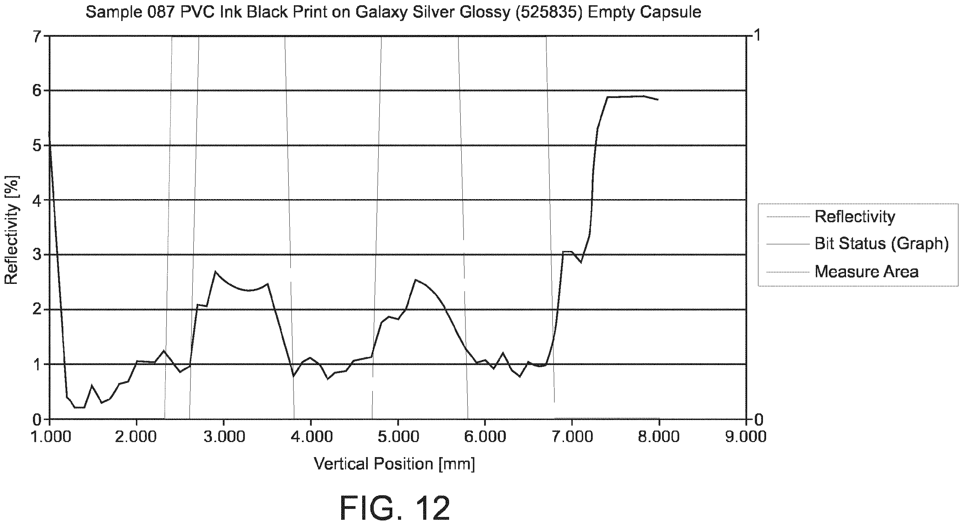

The support comprised a reflective base structure formed of aluminium of 30 microns coated with aluminium pigmented lacquer of 5 microns and 5.5 gsm. The absorbing surfaces were formed of a layer of one-micron black PVC ink sold by Siegwerk. The reflective surfaces were produced by the base structure (bit 1) and the absorbing surfaces (bit 0) were produced by the black ink portions. The maximal reflectivity measured for the reflective surfaces (bit 1) was 2.68%. The spread on bit 1 was of 1.32%. The minimum reflectivity measured for the absorbing surface (bit 0) was 0.73%. The spread on bit 0 was 0.48%. The results are graphically illustrated in figure 12.

**Example 2** - **Detectable code with light-reflective surfaces by the base structure with colourless primer and light-absorbing surfaces by the overlying ink portions.**

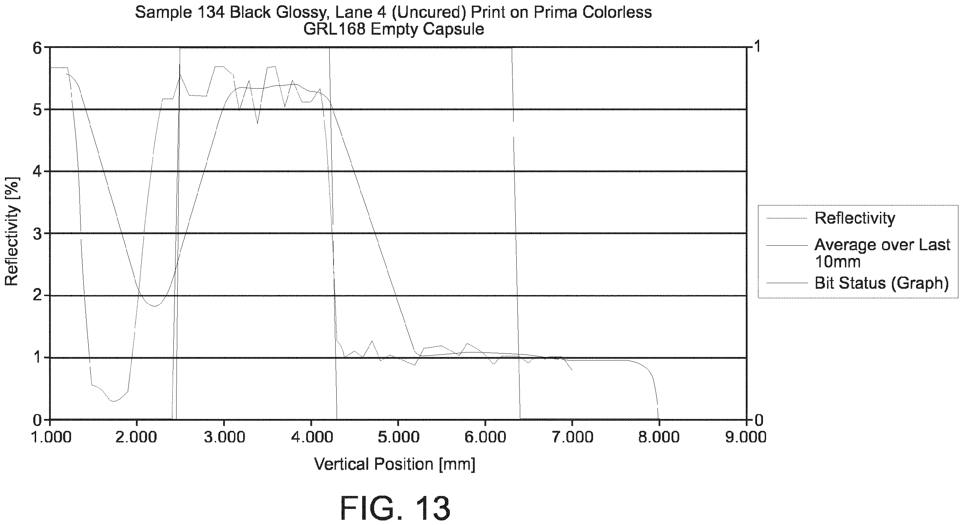

The reflectivity measurement was performed on an empty capsule comprising an optical reading support comprising a base structure forming the reflective surfaces and ink portions forming the absorbing surfaces. For this, the base structure comprised from the B- side to the A (readable) side respectively: a polypropylene layer of 30 microns, adhesive, an aluminium layer of 90 microns, a polyester primer of 2 microns and 2.5 gsm (density). Discontinuous bit portions of back ink of 1 micron sold by Siegwerk were printed onto the surface of the primer. The support was formed by deep drawing into a body of capsule after ink printing. The reflective surfaces were therefore produced by the base structure (bit 1) and the absorbing surfaces (bit 0) were produced by the black ink portions. The reflectivity of the support was measured. The results are graphically illustrated in figure 13. The maximal reflectivity measured for the reflective surfaces (bit 1) was 5.71%. The spread on bit 1 was of 1.49%. The minimum reflectivity measured for the absorbing surface (bit 0) was 0.87%. The spread on bit 0 was 0.47%.

**Example 3** - **Non-detectable code with light-absorbing surfaces by the base structure and the light-reflective surfaces by the overlying ink portions.**

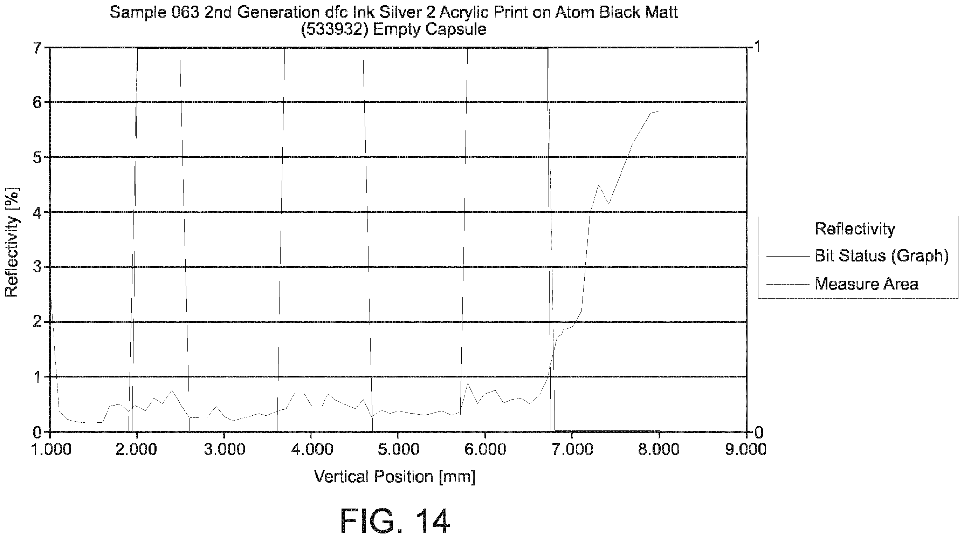

The reflectivity measurement was performed on an empty capsule comprising an optical reading support comprising a base structure forming the absorbing surfaces and ink portions forming the reflective surfaces. For this, an aluminium support layer was covered with a continuous matt black lacquer of 5-micron thickness. The reflective surfaces were produced by discrete portions of ink having a thickness of 1 micron containing more 25% by weight of light-reflective silver pigments. Surprisingly, the signal was not differentiable enough between bit 1 and bit 0. The results are graphically illustrated in figure 14. The maximal reflectivity measured for the reflective surfaces (bit 1) was 0.93 %. The minimum reflectivity measured for the reflective surfaces (bit 1) was 0.53%. The minimum reflectivity measured for the absorbing surface (bit 0) was 0.21%. The spread on bit 0 was 0.23%.

**Claims**

1. An optically readable code support (60a, 60b) to be attached to or part of a capsule for delivering a beverage in a beverage producing device by centrifugation of the capsule, the support comprising at least one sequence of symbols arranged on the support circumferentially about an axis of rotation so that each symbol is sequentially readable by a reading arrangement of an external reading device while the capsule is driven in rotation along the axis of rotation, wherein the symbols are at least partly formed of surfaces arranged to reflect mainly diffusively, in any direction forming an angle comprised between 3° and 10° with respect to a normal of said surface, any incoming beam of light with an incoming direction forming an angle comprise between 0 and 10° with respect to a normal of said surface.

2. Optically readable code support according to claim 1, wherein a plurality of the symbols are at least partly formed of a light reflecting surface, said light reflecting surface, when illuminated by an incoming beam of light having a wavelength of sensibly 830nm, reflects:

> • an outgoing beam with a reference intensity $E_{REF}$, in a direction forming an angle of 0° with respect to a normal of said first surface, when said incoming beam of light has an incoming direction forming an angle of 5° with respect to a normal of said first surface;
> • an outgoing beam with at least 60% of the reference intensity $E_{REF}$ in a direction forming an angle comprised between 3° and 6° with respect to a normal of said first surface, when said incoming beam of light has an incoming direction forming an angle comprised between 0° and 10° with respect to a normal of said first surface.

3. Optically readable code support according to claim 2, wherein the light reflecting surface, when illuminated by an incoming beam of light having a wavelength of sensibly 830nm, reflects an outgoing beam with at least 72% of the reference intensity $E_{REF}$ in a direction forming an angle comprised between 3° and 4.4° with respect to a normal of said first surface, when said incoming beam of light have an incoming direction forming an angle comprised between 0° and 10° with respect to a normal of said first surface.

4. Optically readable code support according to any one of the claims 2 to 3, wherein a plurality of the symbols are at least partly formed of a light absorbing surface, said light absorbing surface, when illuminated by an incoming beam of light having a wavelength of sensibly 830nm and an incoming direction forming an angle comprised between 0° and 10° with respect to a normal of said second surface, reflects an outgoing beam having an intensity smaller than 20% of the reference intensity $E_{REF}$.

5. Optically readable code support according to claim 4, wherein the optical contrast between the light reflecting surface and the light absorbing surface is greater than 60%.

6. Optically readable code support according to any one of claims 1 to 5, having an annulus shape with an inner radius of at least 24mm.

7. Optically readable code support according to claim 6, wherein said annulus shape has an outer radius of less than 28mm.

8. Optically readable code support according to any one of claims 1 to 7, wherein the symbols are arranged along a circle having a radius $R_S$ comprised between 24mm and 28mm.

9. Optically readable code support according to any one of claims 1 to 8, wherein a width Hs of each symbol is comprised between 1mm and 2.8mm.

10. Optically readable code support according to any one of claims 1 to 9, wherein the sequence comprises at least 100 symbols.

11. Optically readable code support according to any one of claims 1 to 10, wherein the first entity and/or the second entity is/are spreading over a sensibly trapezoidal area, which is sensibly rectilinear.

12. Optically readable code support according to any one of claims 1 to 11, wherein the surface occupied by each symbol is spreading over an area having an angular sector inferior to 3.6 degrees.

13. Optically readable code support according to claim 12, wherein the surface occupied by each symbol is spreading over an area having an angular sector greater than 1.8 degrees.

14. Optically readable code support according to any one of claims 1 to 13, wherein each sequence is arranged along at least a eighth of the circumference.

15. Optically readable code support according to any one of claims 1 to 14, wherein the symbols are arranged along at least the half of the circumference.

16. Optically readable code support according to any one of claims 1 to 15, wherein the symbols are arranged along the entire circumference.

17. Optically readable code support according to any one of claims 1 to 16, wherein the code support comprising a base structure (500) extending continuously at least along said sequence of symbols and discontinuous discrete light-absorbing portions (528; 628) locally applied onto or formed at the surface of said base structure; wherein the discontinuous discrete light-absorbing portions form the light-absorbing surfaces and the base structure (500) forms the light-reflective surfaces (400-403; 600-604) outside the surface areas occupied by the discrete light-absorbing portions; said discrete light-absorbing portions (410-414; 610; 615) are arranged to provide a lower light-reflectivity than the one of the base structure outside the surface areas occupied by the discrete light-absorbing portions.

18. Capsule for delivering a beverage in a beverage producing device by centrifugation, the capsule comprising a flange-like rim, the flange-like rim comprising an optically readable code support according to any of the preceding claims.

19. System for preparing a beverage from a capsule according to claim 18, the system comprising the capsule and a beverage preparation device; wherein the beverage preparation device comprises capsule holding means (32) for holding the capsule and rotational drive means (5) for driving the holding means and capsule in rotation along said axis of rotation; the beverage preparation devices further comprising an optical reading arrangement (100) configured for reading the symbols represented on the optically readable code support by measuring a reflectivity and/or a contrast of a section of the code support by illuminating a fixed illuminated area smaller than the area occupied by the first surface or the second surface, while driving the rotational drive means (5) so as to the capsule performs at least one complete revolution.

20. System according to claim 19, wherein the capsule holding means (32) is at least partially transparent, and wherein the optical reading arrangement (100) is configured for measuring the reflectivity and/or the contrast of an illuminated area of the code support, through the capsule holding means (32).

21. Method for reading the symbols arranged on the code support of a capsule according to claim 18, in a beverage preparation device, said beverage preparation device comprising capsule holding means (32) for holding the capsule and rotational drive means (5) for driving the holding means and capsule in rotation along said axis of rotation; the beverage preparation devices further comprising an optical reading arrangement (100); the method comprises the step of measuring a reflectivity and/or a contrast of a section of the code support by illuminating a fixed illuminated area smaller than the area occupied by the first surface or the second surface, while driving the rotational drive means (5) so as to the capsule performs at least one complete revolution.

**Patentansprüche**

1. Optisch lesbarer Codeträger (60a, 60b), zum anbringen an einer oder Teil einer Kapsel zum Abgeben eines Getränks in einer Getränkeherstellungsvorrichtung durch Zentrifugieren der Kapsel, wobei der Träger mindestens eine Symbolabfolge umfasst, die am Träger in Umfangsrichtung um eine Drehachse angeordnet ist, sodass jedes Symbol durch eine Leseanordnung einer externen Lesevorrichtung sequenziell lesbar ist, während die Kapsel in Rotation um eine Rotationsachse angetrieben wird, wobei die Symbole mindestens teilweise aus Oberflächen gebildet sind, die angeordnet sind, um beliebige einfallende Lichtstrahlen in beliebigen Richtungen, die in Bezug auf eine Senkrechte der Oberfläche einen Winkel zwischen 3° und 10° bilden, mit einer Einfallsrichtung hauptsächlich diffus zu reflektieren, die in Bezug auf eine Senkrechte der Oberfläche einen Winkel zwischen 0 und 10° umfasst.

2. Optisch lesbarer Codeträger nach Anspruch 1, wobei eine Vielzahl der Symbole mindestens teilweise aus einer lichtreflektierenden Oberfläche gebildet ist, wobei die lichtreflektierende Oberfläche bei Beleuchtung durch einen einfallenden Lichtstrahl mit einer Wellenlänge von vernünftigerweise 830 nm reflektiert:

    • einen ausgehenden Strahl mit einer Referenzintensität $E_{REF}$ in einer Richtung, die in Bezug auf eine Senkrechte der ersten Oberfläche einen Winkel von 0° bildet, wenn der einfallende Lichtstrahl eine Einfallsrichtung aufweist, die in Bezug auf eine Senkrechte der ersten Oberfläche einen Winkel von 5° bildet;
    • einen ausgehenden Strahl mit mindestens 60 % der Referenzintensität $E_{REF}$ in einer Richtung, die in Bezug auf eine Senkrechte der ersten Oberfläche einen Winkel zwischen 3° und 6° bildet, wenn der einfallende Lichtstrahl eine Einfallsrichtung aufweist, die in Bezug auf eine Senkrechte der ersten Oberfläche einen Winkel zwischen 0° und 10° umfasst.

3. Optisch lesbarer Codeträger nach Anspruch 2, wobei die lichtreflektierende Oberfläche bei Beleuchtung durch einen einfallenden Lichtstrahl, der eine Wellenlänge von vernünftigerweise 830 nm aufweist, einen ausgehenden Strahl mit mindestens 72 % der Referenzintensität $E_{REF}$ in einer Richtung reflektiert, die in Bezug auf eine Senkrechte der ersten Oberfläche einen Winkel zwischen 3° und 4,4° bildet, wenn der einfallende Lichtstrahl eine Einfallsrichtung aufweist, die in Bezug auf eine Senkrechte der ersten Oberfläche einen Winkel zwischen 0° und 10° bildet.

4. Optisch lesbarer Codeträger nach einem der Ansprüche 2 bis 3, wobei eine Vielzahl der Symbole mindestens teilweise aus einer lichtabsorbierenden Oberfläche gebildet ist, wobei die lichtabsorbierende Oberfläche bei Beleuchtung durch einen einfallenden Lichtstrahl, der eine Wellenlänge von vernünftigerweise 830 nm und eine Einfallsrichtung aufweist, die in Bezug auf eine Senkrechte der zweiten Oberfläche einen Winkel zwischen 0° und 10° bildet, einen ausgehenden Strahl reflektiert, der eine Intensität aufweist, die kleiner als 20 % der Referenzintensität $E_{REF}$ ist.

5. Optisch lesbarer Codeträger nach Anspruch 4, wobei der optische Kontrast zwischen der lichtreflektierenden Oberfläche und der lichtabsorbierenden Oberfläche größer als 60 % ist.

6. Optisch lesbarer Codeträger nach einem der Ansprüche 1 bis 5, der eine Ringform mit einem Innenradius von mindestens 24 mm aufweist.

7. Optisch lesbarer Codeträger nach Anspruch 6, wobei die Ringform einen Außenradius von weniger als 28 mm aufweist.

8. Optisch lesbarer Codeträger nach einem der Ansprüche 1 bis 7, wobei die Symbole entlang eines Kreises angeordnet sind, der einen Radius $R_s$ aufweist, der zwischen 24 mm und 28 mm liegt.

9. Optisch lesbarer Codeträger nach einem der Ansprüche 1 bis 8, wobei eine Breite Hs jedes Symbols zwischen 1 mm und 2,8 mm liegt.

10. Optisch lesbarer Codeträger nach einem der Ansprüche 1 bis 9, wobei die Abfolge mindestens 100 Symbole umfasst.

11. Optisch lesbarer Codeträger nach einem der Ansprüche 1 bis 10, wobei sich die erste Entität und/oder die zweite Entität über eine vernünftigerweise trapezförmige Fläche erstrecken, die vernünftigerweise geradlinig ist.

12. Optisch lesbarer Codeträger nach einem der Ansprüche 1 bis 11, wobei sich die durch jedes Symbol eingenommene Oberfläche über einen Bereich erstreckt, der einen Winkelsektor von unter 3,6 Grad aufweist.

13. Optisch lesbarer Codeträger nach Anspruch 12, wobei sich die durch jedes Symbol eingenommene Oberfläche über einen Bereich erstreckt, der einen Winkelsektor von mehr als 1,8 Grad aufweist.

14. Codeträger nach einem der Ansprüche 1 bis 13, wobei jede Abfolge entlang mindestens eines Achtels des Umfangs angeordnet ist.

15. Optisch lesbarer Codeträger nach einem der Ansprüche 1 bis 14, wobei die Symbole entlang mindestens der Hälfte des Umfangs angeordnet sind.

16. Optisch lesbarer Codeträger nach einem der Ansprüche 1 bis 15, wobei die Symbole entlang des gesamten Umfangs angeordnet sind.

17. Optisch lesbarer Codeträger nach einem der Ansprüche 1 bis 16, wobei der Codeträger eine Unterteilstruktur (500) umfasst, die sich kontinuierlich mindestens entlang der Symbolabfolge erstreckt und diskontinuierliche diskrete lichtabsorbierende Abschnitte (528; 628) lokal auf die Oberfläche der Unterteilstruktur aufgebracht oder an dieser gebildet sind; wobei die diskontinuierlichen diskreten lichtabsorbierenden Abschnitte die lichtabsorbierenden Oberflächen bilden und die Unterteilstruktur (500) die lichtreflektierenden Oberflächen (400 bis 403; 600 bis 604) außerhalb der Oberflächenbereiche bildet, die durch die diskreten lichtabsorbierenden Abschnitte eingenommen werden; die diskreten lichtabsorbierenden Abschnitte (410 bis 414; 610; 615) angeordnet sind, um ein niedrigeres Lichtreflexionsvermögen als das der Unterteilstruktur außerhalb der Oberflächenbereiche bereitzustellen, die durch die diskreten lichtabsorbierenden Abschnitte eingenommen werden.

18. Kapsel zum Abgeben eines Getränks in einer Getränkeherstellungsvorrichtung durch Zentrifugieren, wobei die Kapsel einen flanschartigen Rand umfasst, wobei der flanschartige Rand einen optisch lesbaren Codeträger nach einem der vorstehenden Ansprüche umfasst.

19. System zum Zubereiten eines Getränks aus einer Kapsel nach Anspruch 18, wobei das System die Kapsel und eine Getränkezubereitungsvorrichtung umfasst; wobei die Getränkezubereitungsvorrichtung Kapselhaltemittel (32) zum Halten der Kapsel und Drehantriebsmittel (5) zum Antreiben der Haltemittel und der Kapsel in Drehung entlang der Drehachse umfasst; wobei die Getränkezubereitungsvorrichtungen ferner eine optische Leseanordnung (100) umfassen, die zum Lesen der auf dem optisch lesbaren Codeträger dargestellten Symbole durch Messen eines Reflexionsvermögens und/oder eines Kontrasts eines Abschnitts des Codeträgers durch Beleuchten eines festen beleuchteten Bereichs konfiguriert sind, der kleiner als der Bereich ist, der durch die erste oder die zweite Oberfläche eingenommen wird, während die Drehantriebsmittel (5) angetrieben werden, sodass die Kapsel mindestens eine vollständige Umdrehung durchführt.

20. System nach Anspruch 19, wobei die Kapselhaltemittel (32) mindestens teilweise transparent sind und wobei die optische Leseanordnung (100) zum Messen des Reflexionsvermögens und/oder des Kontrasts eines beleuchteten Bereichs des Codeträgers durch die Kapselhaltemittel (32) konfiguriert ist.

**21.** Verfahren zum Lesen der Symbole, die auf dem Codeträger einer Kapsel nach Anspruch 18 angeordnet sind, in einer Getränkezubereitungsvorrichtung, wobei die Getränkezubereitungsvorrichtung Kapselhaltemittel (32) zum Halten der Kapsel und Drehantriebsmittel (5) zum Antreiben der Haltemittel und der Kapsel in Drehung entlang der Drehachse umfasst; wobei die Getränkezubereitungsvorrichtungen ferner eine optische Leseanordnung (100) umfassen; das Verfahren den Schritt des Messens eines Reflexionsvermögens und/oder eines Kontrasts eines Abschnitts des Codeträgers durch Beleuchten eines festen beleuchteten Bereichs umfasst, der kleiner als der Bereich ist, der durch die erste oder die zweite Oberfläche eingenommen wird, während die Drehantriebsmittel (5) angetrieben werden, sodass die Kapsel mindestens eine vollständige Umdrehung durchführt.

## Revendications

**1.** Support de code lisible optiquement (60a, 60b) destiné à être fixé à ou faisant partie d'une capsule pour distribuer une boisson dans un dispositif de production de boisson par centrifugation de la capsule, le support comprenant au moins une séquence de symboles agencée sur le support de façon circonférentielle autour d'un axe de rotation de sorte que chaque symbole est lisible séquentiellement par un agencement de lecture d'un dispositif de lecture externe alors que la capsule est entraînée en rotation le long de l'axe de rotation,
dans lequel les symboles sont au moins partiellement formés de surfaces agencées pour réfléchir principalement par diffusion, dans n'importe quelle direction en formant un angle compris entre 3° et 10° par rapport à une normale de ladite surface, n'importe quel faisceau de lumière entrant avec une direction entrante formant un angle compris entre 0 et 10° par rapport à une normale de ladite surface.

**2.** Support de code lisible optiquement selon la revendication 1, dans lequel une pluralité des symboles sont au moins partiellement formés d'une surface de réflexion de lumière, ladite surface de réflexion de lumière, lorsqu'elle est éclairée par un faisceau de lumière entrant ayant une longueur d'onde de sensiblement 830 nm, réfléchit :

• un faisceau sortant avec une intensité de référence $E_{REF}$, dans une direction formant un angle de 0° par rapport à une normale de ladite première surface, lorsque ledit faisceau de lumière entrant a une direction entrante formant un angle de 5° par rapport à une normale de ladite première surface ;
• un faisceau sortant avec au moins 60 % de l'intensité de référence $E_{REF}$ dans une direction formant un angle compris entre 3° et 6° par rapport à une normale de ladite première surface, lorsque ledit faisceau de lumière entrant a une direction entrante formant un angle compris entre 0° et 10° par rapport à une normale de ladite première surface.

**3.** Support de code lisible optiquement selon la revendication 2, dans lequel la surface de réflexion de lumière, lorsqu'elle est éclairée par un faisceau de lumière entrant ayant une longueur d'onde de sensiblement 830 nm, réfléchit un faisceau sortant avec au moins 72 % de l'intensité de référence $E_{REF}$ dans une direction formant un angle compris entre 3° et 4,4° par rapport à une normale de ladite première surface, lorsque ledit faisceau de lumière entrant a une direction entrante formant un angle compris entre 0° et 10° par rapport à une normale de ladite première surface.

**4.** Support de code lisible optiquement selon l'une quelconque des revendications 2 à 3, dans lequel une pluralité des symboles sont au moins partiellement formés d'une surface d'absorption de lumière, ladite surface d'absorption de lumière, lorsqu'elle est éclairée par un faisceau de lumière entrant ayant une longueur d'onde de sensiblement 830 nm et une direction entrante formant un angle compris entre 0° et 10° par rapport à une normale de ladite deuxième surface, réfléchit un faisceau sortant ayant une intensité plus petite que 20 % de l'intensité de référence $E_{REF}$.

**5.** Support de code lisible optiquement selon la revendication 4, dans lequel le contraste optique entre la surface de réflexion de lumière et la surface d'absorption de lumière est supérieur à 60 %.

**6.** Support de code lisible optiquement selon l'une quelconque des revendications 1 à 5, ayant une forme d'anneau avec un rayon interne d'au moins 24 mm.

**7.** Support de code lisible optiquement selon la revendication 6, dans lequel ladite forme d'anneau a un rayon externe inférieur à 28 mm.

**8.** Support de code lisible optiquement selon l'une quelconque des revendications 1 à 7, dans lequel les symboles sont agencés le long d'un cercle ayant un rayon $R_s$ compris entre 24 mm et 28 mm.

**9.** Support de code lisible optiquement selon l'une quelconque des revendications 1 à 8, dans lequel une largeur Hs de chaque symbole est comprise entre 1 mm et 2,8 mm.

**10.** Support de code lisible optiquement selon l'une quelconque des revendications 1 à 9, dans lequel la séquence comprend au moins 100 symboles.

11. Support de code lisible optiquement selon l'une quelconque des revendications 1 à 10, dans lequel la première entité et/ou la deuxième entité est/sont étendue(s) sur une zone sensiblement trapézoïdale, qui est sensiblement rectiligne.

12. Support de code lisible optiquement selon l'une quelconque des revendications 1 à 11, dans lequel la surface occupée par chaque symbole est étendue sur une zone ayant un secteur angulaire inférieur à 3,6 degrés.

13. Support de code lisible optiquement selon la revendication 12, dans lequel la surface occupée par chaque symbole est étendue sur une zone ayant un secteur angulaire supérieur à 1,8 degré.

14. Support de code lisible optiquement selon l'une quelconque des revendications 1 à 13, dans lequel chaque séquence est agencée le long d'au moins un huitième de la circonférence.

15. Support de code lisible optiquement selon l'une quelconque des revendications 1 à 14, dans lequel les symboles sont agencés le long d'au moins la moitié de la circonférence.

16. Support de code lisible optiquement selon l'une quelconque des revendications 1 à 15, dans lequel les symboles sont agencés le long de la circonférence entière.

17. Support de code lisible optiquement selon l'une quelconque des revendications 1 à 16, dans lequel le support de code comprend une structure de base (500) s'étendant de façon continue au moins le long de ladite séquence de symboles et de parties d'absorption de lumière distinctes discontinues (528 ; 628) localement appliquées sur ou formées au niveau de la surface de ladite structure de base ; dans lequel les parties d'absorption de lumière distinctes discontinues forment les surfaces d'absorption de lumière et la structure de base (500) forme les surfaces de réflexion de lumière (400-403 ; 600-604) à l'extérieur des zones de surface occupées par les parties d'absorption de lumière distinctes ; lesdites parties d'absorption de lumière distinctes (410-414 ; 610 ; 615) sont agencées pour fournir une réflectivité de lumière plus basse que celle de la structure de base à l'extérieur des zones de surface occupées par les parties d'absorption de lumière distinctes.

18. Capsule pour distribuer une boisson dans un dispositif de production de boisson par centrifugation, la capsule comprenant un rebord de type collerette, le rebord de type collerette comprenant un support de code lisible optiquement selon l'une quelconque des revendications précédentes.

19. Système pour la préparation d'une boisson à partir d'une capsule selon la revendication 18, le système comprenant la capsule et un dispositif de préparation de boisson ; dans lequel le dispositif de préparation de boisson comprend un moyen de maintien de capsule (32) pour maintenir la capsule et un moyen d'entraînement en rotation (5) pour entraîner le moyen de maintien et la capsule en rotation le long dudit axe de rotation ; les dispositifs de préparation de boisson comprenant en outre un agencement de lecture optique (100) configuré pour lire les symboles représentés sur le support de code lisible optiquement en mesurant une réflectivité et/ou un contraste d'une section du support de code en éclairant une zone éclairée fixe plus petite que la zone occupée par la première surface ou la deuxième surface, tout en entraînant le moyen d'entraînement en rotation (5) de façon à ce que la capsule réalise au moins un tour complet.

20. Système selon la revendication 19, dans lequel le moyen de maintien de capsule (32) est au moins partiellement transparent, et dans lequel l'agencement de lecture optique (100) est configuré pour mesurer la réflectivité et/ou le contraste d'une zone éclairée du support de code, à travers le moyen de maintien de capsule (32).

21. Procédé de lecture des symboles agencés sur le support de code d'une capsule selon la revendication 18, dans un dispositif de préparation de boisson, ledit dispositif de préparation de boisson comprenant un moyen de maintien de capsule (32) pour maintenir la capsule et un moyen d'entraînement en rotation (5) pour entraîner le moyen de maintien et la capsule en rotation le long dudit axe de rotation ; les dispositifs de préparation de boisson comprenant en outre un agencement de lecture optique (100) ; le procédé comprend l'étape de mesure d'une réflectivité et/ou d'un contraste d'une section du support de code en éclairant une zone éclairée fixe plus petite que la zone occupée par la première surface ou la deuxième surface, tout en entraînant le moyen d'entraînement en rotation (5) de façon à ce que la capsule réalise au moins un tour complet.

FIG. 1

FIG. 2b

FIG. 2a

FIG. 3a

FIG. 3b

FIG. 3c

FIG. 4

FIG. 5

FIG. 6

FIG. 7

FIG. 8

410 400 411 401 412 402 412 403 414

528  528  528  528

A

515

30

510

500

525

520

B

FIG. 9

400  401  402  403

528  528  528

535

410  528  411  528  412  413  528  414

A

530

30

510

500

525

520

B

FIG. 10

FIG. 11

Sample 087 PVC Ink Black Print on Galaxy Silver Glossy (525835) Empty Capsule

FIG. 12

Sample 134 Black Glossy, Lane 4 (Uncured) Print on Prima Colorless
GRL168 Empty Capsule

FIG. 13

EP 2 780 866 B1

Sample 063 2nd Generation dfc Ink Silver 2 Acrylic Print on Atom Black Matt (533932) Empty Capsule

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010026053 A
- EP 1764015 A1
- DE 102010002439 A1
- WO 2011069830 A1
- US 5103081 A
- WO 2011141535 A1
- WO 20110069830 A
- WO 20100066705 A
- WO 20110092301 A